# EUROPEAN PATENT SPECIFICATION

(11) **EP 4 685 545 B1**
(45) Date of publication and mention of the grant of the patent: **28.10.2026**
(21) Application number: 25216114.6
(22) Date of filing: 09.09.2019
(51) Int. Cl.: G02B 27/00, G02B 6/10, G02F 1/01, G02B 27/01

(54) **OPTICAL SYSTEMS INCLUDING LIGHT-GUIDE OPTICAL ELEMENTS WITH TWO-DIMENSIONAL EXPANSION**
OPTISCHE SYSTEME MIT OPTISCHEN LICHTLEITERELEMENTEN MIT ZWEIDIMENSIONALER EXPANSION
SYSTÈMES OPTIQUES COMPRENANT DES ÉLÉMENTS OPTIQUES DE GUIDAGE DE LUMIÈRE À EXPANSION BIDIMENSIONNELLE

(30) Priority: 09.09.2018 US 201862728803 P; 26.03.2019 US 201962823701 P
(43) Date of publication of application: 28.01.2026
(62) Document number(s) of the earlier application(s) in accordance with Art. 76 EPC: 24211944.4 / 4 495 661; 19858448.4 / 3 847 500
(73) Proprietor: Lumus Ltd., 7403631 Ness Ziona (IL)
(72) Inventor: EISENFELD, Tsion, 7835515 Ashkelon (IL); CHRIKI, Ronen, 7140903 Lod (IL)
(74) Representative: Kancelaria Eupatent.pl Sp. z o.o.

(56) References cited:
- EP-A1- 2 947 493
- EP-B1- 1 295 163
- WO-A1-2017/120346
- WO-A1-2018/154576
- US-A1- 2017 371 160
- US-A1- 2018 210 202

## Description

### FIELD AND BACKGROUND OF THE INVENTION

The present invention relates to optical systems and, in particular, it concerns an optical system including a light-guide optical element (LOE) for achieving optical aperture expansion.

Many near-eye display systems include a transparent light-guide optical element (LOE) or "waveguide" placed before the eye of the user, which conveys an image within the LOE by internal reflection and then couples out the image by a suitable output coupling mechanism towards the eye of the user. The output coupling mechanism may be based on embedded partial reflectors or "facets", or may employ a diffractive pattern. The description below will refer primarily to a facet-based coupling-out arrangement, but it should be appreciated that various features of the invention are also applicable to diffractive arrangements.

For sake of general overview of a technical background for optical systems including light guide optical elements, the following documents can be considered: US2018210202A1, WO2017120346A1, EP2947493A1, WO2018154576A1, EP1295163B1, US2017371160A1.

### SUMMARY OF THE INVENTION

The present invention is an optical systemaccording to the appended claims.

According to some teachings presented herein, there is provided, an optical system for directing image illumination injected at a coupling-in region to an eye-motion box for viewing by an eye of a user, the optical system comprising a light-guide optical element (LOE) formed from transparent material, the LOE comprising: (a) a first region containing a first set of planar, mutually-parallel, partially-reflecting surfaces having a first orientation; (b) a second region containing a second set of planar, mutually-parallel, partially-reflecting surfaces having a second orientation non-parallel to the first orientation; (c) a set of mutually-parallel major external surfaces, the major external surfaces extending across the first and second regions such that both the first set of partially-reflecting surfaces and the second set of partially-reflecting surfaces are located between the major external surfaces, wherein the second set of partially-reflecting surfaces are at an oblique angle to the major external surfaces so that a part of image illumination propagating within the LOE by internal reflection at the major external surfaces from the first region into the second region is coupled out of the LOE towards the eye-motion box, and wherein the first set of partially-rellecting surfaces are oriented so that a part of image illumination propagating within the LOE by internal reflection at the major external surfaces from the coupling-in region is deflected towards the second region, wherein each of the partially-reflecting surfaces of the first set of partially-reflecting surfaces comprises a partially-reflecting coating at an interface plane between two plates forming part of the LOE, and wherein the partially-reflecting coating is located over a first part of the interface plane, and at least one of the partially-reflecting surfaces has a second part of the interface plane bonded so as to form an optical continuum between the two plates.

According to some teachings presented herein, an envelope of ray paths from the coupling-in region propagating within the LOE, deflected by one of the first set of partially-reflecting surfaces and coupled out by one of the second set of partially-reflecting surfaces in a direction reaching the eye-motion box defines an imaging area of the one of the first set of partially-reflecting surfaces, and wherein an area of the one of the first set of partially-reflecting surfaces lying outside the envelope defines a non-imaging area of the one of the first set of partially-reflecting surfaces, wherein a majority of the non-imaging area is bonded so as to form an optical continuum between the two plates.

According to some teachings presented herein, the first set of partially-reflecting surfaces have a non-uniform spacing such that a spacing between adjacent partially-reflecting surfaces proximal to the coupling-in region is smaller than a spacing between adjacent partially-reflecting surfaces further from the coupling-in region.

According to some teachings presented herein, the optical system further comprising an image projector for projecting a collimated image having an angular field of view about an optical axis, the image projector being optically coupled to the LOE so as to introduce the collimated image into the LOE at the coupling-in region as a propagating image propagating within the LOE by internal reflection at the major external surfaces, the propagating image being partially reflected by the first set of partially-reflecting surfaces to generate a deflected propagating image propagating within the LOE by internal reflection at the major external surfaces, the deflected propagating image being partially reflected by the second set of partially-reflecting surfaces to generate a coupled-out image directed outwards from one of the major external surfaces towards the eye-motion box, the optical axis of the coupled-out image being inclined relative to a normal to the major external surface with a non-zero component of inclination along an in-plane extensional direction of the second set of partially-reflecting surfaces.

According to some teachings presented herein,
configured for projecting the image to the eye-motion box with principal axes including an X axis corresponding to a first horizontal or vertical axis of the projected image, and a Y axis corresponding to the other axis of the projected image, and wherein the second set of partially-reflecting surfaces have an extensional direction parallel to the major external surfaces, the extensional direction having an angular offset relative to X axis.

According to some teachings presented herein,
configured for projecting the image to the eye-motion box with principal axes including an X axis corresponding to a first horizontal or vertical axis of the projected image, and a Y axis corresponding to the other axis of the projected image, the optical system further comprising an image projector for projecting a collimated image having an angular field of view about an optical axis, the image projector being optically coupled to the LOE so as to introduce the collimated image into the LOE at the coupling-in region as a propagating image propagating within the LOE by internal reflection at the major external surfaces, an in-plane component of the optical axis of the propagating image being inclined relative to the X axis towards a boundary of the second region.

According to some teachings presented herein, an in-plane component of one extremity of the field of view of the propagating image is substantially parallel to the X axis.

According to some teachings presented herein, the system is
configured for projecting the image to the eye-motion box with principal axes including an X axis corresponding to a first horizontal or vertical axis of the projected image, and a Y axis corresponding to the other axis of the projected image, the optical system further comprising an image projector for projecting a collimated image having an angular field of view about an optical axis, the image projector being optically coupled to the LOE so as to introduce the collimated image into the LOE at the coupling-in region as a propagating image propagating within the LOE by internal reflection at the major external surfaces, the propagating image being partially reflected by the first set of partially-reflecting surfaces to generate a deflected propagating image propagating within the LOE by internal reflection at the major external surfaces, an in-plane component of the optical axis of the deflected propagating image being inclined relative to the Y axis.

According to some teachings presented herein, there is described
an optical system for projecting an image injected at a coupling-in region for viewing at an eye-motion box by an eye of a user, the image being viewed with principal axes including an X axis corresponding to a horizontal or vertical axis of the projected image, and a Y axis corresponding to an axis of the projected image perpendicular to the X axis, the optical system comprising a light-guide optical element (LOE) formed from transparent material, the LOE comprising: (a) a first region containing a first set of planar, mutually-parallel, partially-reflecting surfaces having a first orientation; (b) a second region containing a second set of planar, mutually-parallel, partially-reflecting surfaces having a second orientation non-parallel to the first orientation; (c) a set of mutually-parallel major external surfaces, the major external surfaces extending across the first and second regions such that both the first set of partially-reflecting surfaces and the second set of partially-reflecting surfaces are located between the major external surfaces, wherein the second set of partially-reflecting surfaces are at an oblique angle to the major external surfaces so that a part of image illumination propagating within the LOE by internal reflection at the major external surfaces from the first region into the second region is coupled out of the LOE towards the eye-motion box, and wherein the first set of partially-reflecting surfaces are oriented so that a part of image illumination propagating within the LOE by internal reflection at the major external surfaces from the coupling-in region is deflected towards the second region, and wherein the second set of partially-reflecting surfaces have an extensional direction parallel to the major external surfaces, the extensional direction having an angular offset relative to X axis.

According to some teachings presented herein, there is described
an optical system for projecting an image injected at a coupling-in region for viewing at an eye-motion box by an eye of a user, the image being viewed with principal axes including an X axis corresponding to a horizontal or vertical axis of the projected image, and a Y axis corresponding to an axis of the projected image perpendicular to the X axis, the optical system comprising a light-guide optical element (LOE) formed from transparent material, the LOE comprising: (a) a first region containing a first set of planar, mutually-parallel, partially-reflecting surfaces having a first orientation; (b) a second region containing a second set of planar, mutually-parallel, partially-reflecting surfaces having a second orientation non-parallel to the first orientation; (c) a set of mutually-parallel major external surfaces, the major external surfaces extending across the first and second regions such that both the first set of partially-reflecting surfaces and the second set of partially-reflecting surfaces are located between the major external surfaces, wherein the second set of partially-reflecting surfaces are at an oblique angle to the major external surfaces so that a part of image illumination propagating within the LOE by internal reflection at the major external surfaces from the first region into the second region is coupled out of the LOE towards the eye-motion box, and wherein the first set of partially-reflecting surfaces are oriented so that a part of image illumination propagating within the LOE by internal reflection at the major external surfaces from the coupling-in region is deflected towards the second region, the optical system further comprising an image projector for projecting a collimated image having an angular field of view about an optical axis, the image projector being optically coupled to the LOE so as to introduce the collimated image into the LOE at the coupling-in region as a propagating image propagating within the LOE by internal reflection at the major external surfaces, an in-plane component of the optical axis of the propagating image being inclined relative to the X axis towards a boundary of the second region.

According to some teachings presented herein, an in-plane component of one extremity of the field of view of the propagating image is substantially parallel to the X axis.

According to some teachings presented herein, there is described
an optical system for projecting an image injected at a coupling-in region for viewing at an eye-motion box by an eye of a user, the image being viewed with principal axes including an X axis corresponding to a horizontal or vertical axis of the projected image, and a Y axis corresponding to an axis of the projected image perpendicular to the X axis, the optical system comprising a light-guide optical element (LOE) formed from transparent material, the LOE comprising: (a) a first region containing a first set of planar, mutually-parallel, partially-reflecting surfaces having a first orientation; (b) a second region containing a second set of planar, mutually-parallel, partially-reflecting surfaces having a second orientation non-parallel to the first orientation; (c) a set of mutually-parallel major external surfaces, the major external surfaces extending across the first and second regions such that both the first set of partially-reflecting surfaces and the second set of partially-reflecting surfaces are located between the major external surfaces, wherein the second set of partially-reflecting surfaces are at an oblique angle to the major external surfaces so that a part of image illumination propagating within the LOE by internal reflection at the major external surfaces from the first region into the second region is coupled out of the LOE towards the eye-motion box, and wherein the first set of partially-reflecting surfaces are oriented so that a part of image illumination propagating within the LOE by internal reflection at the major external surfaces from the coupling-in region is deflected towards the second region, the optical system further comprising an image projector for projecting a collimated image having an angular field of view about an optical axis, the image projector being optically coupled to the LOE so as to introduce the collimated image into the LOE at the coupling-in region as a propagating image propagating within the LOE by internal reflection at the major external surfaces, the propagating image being partially reflected by the first set of partially-rellecting surfaces to generate a deflected propagating image propagating within the LOE by internal reflection at the major external surfaces, an in-plane component of the optical axis of the deflected propagating image being inclined relative to the Y axis.

According to some teachings presented herein, the eye-motion box is delimited by at least one straight line parallel to the X axis.

According to some teachings presented herein, the projected image is a rectangular image having edges parallel to the X axis and the Y axis.

According to some teachings presented herein, there is also provided a support arrangement configured for supporting the LOE relative to the head of the user with one of the major external surfaces in facing relation to the eye of the user and in an orientation relative to the eye of the user such that the X axis is oriented horizontally.

According to some teachings presented herein, the first region and the second region are separated by a boundary that extends parallel to the X axis.

According to some teachings presented herein, there is described
an optical system for directing image illumination injected at a coupling-in region to an eye-motion box for viewing by an eye of a user, the optical system comprising a light-guide optical element (LOE) formed from transparent material, the LOE comprising: (a) a first region containing a first set of planar, mutually-parallel, partially-reflecting surfaces having a first orientation; (b) a second region containing a second set of planar, mutually-parallel, partially-reflecting surfaces having a second orientation non-parallel to the first orientation; (c) a set of mutually-parallel major external surfaces, the major external surfaces extending across the first and second regions such that both the first set of partially-reflecting surfaces and the second set of partially-reflecting surfaces are located between the major external surfaces, wherein the second set of partially-reflecting surfaces are at an oblique angle to the major external surfaces so that a part of image illumination propagating within the LOE by internal reflection at the major external surfaces from the first region into the second region is coupled out of the LOE towards the eye-motion box, and wherein the first set of partially-reflecting surfaces are oriented so that a part of image illumination propagating within the LOE by internal reflection at the major external surfaces from the coupling-in region is deflected towards the second region, and wherein the first set of partially-reflecting surfaces have a non-uniform spacing such that a spacing between adjacent partially-reflecting surfaces proximal to the coupling-in region is smaller than a spacing between adjacent partially-reflecting surfaces further from the coupling-in region.

According to some teachings presented herein, there is described
an optical system for directing image illumination injected at a coupling-in region to an eye-motion box for viewing by an eye of a user, the optical system comprising a light-guide optical element (LOE) formed from transparent material, the LOE comprising: (a) a first region containing a first set of planar, mutually-parallel, partially-reflecting surfaces having a first orientation; (b) a second region containing a second set of planar, mutually-parallel, partially-reflecting surfaces having a second orientation non-parallel to the first orientation; (c) a set of mutually-parallel major external surfaces, the major external surfaces extending across the first and second regions such that both the first set of partially-reflecting surfaces and the second set of partially-reflecting surfaces are located between the major external surfaces, wherein the second set of partially-reflecting surfaces are at an oblique angle to the major external surfaces so that a part of image illumination propagating within the LOE by internal reflection at the major external surfaces from the first region into the second region is coupled out of the LOE towards the eye-motion box, and wherein the first set of partially-reflecting surfaces are oriented so that a part of image illumination propagating within the LOE by internal reflection at the major external surfaces from the coupling-in region is deflected towards the second region, the optical system further comprising an image projector for projecting a collimated image having an angular field of view about an optical axis, the image projector being optically coupled to the LOE so as to introduce the collimated image into the LOE at the coupling-in region as a propagating image propagating within the LOE by internal reflection at the major external surfaces, the propagating image being partially reflected by the first set of partially-reflecting surfaces to generate a deflected propagating image propagating within the LOE by internal reflection at the major external surfaces, the deflected propagating image being partially reflected by the second set of partially-reflecting surfaces to generate a coupled-out image directed outwards from one of the major external surfaces towards the eye-motion box, the optical axis of the coupled-out image being inclined relative to a normal to the major external surface with a non-zero component of inclination along an in-plane extensional direction of the second set of partially-reflecting surfaces.

### BRIEF DESCRIPTION OF THE DRAWINGS

The invention is herein described, by way of example only, with reference to the accompanying drawings, wherein:
FIGS. 1A and 1B are schematic isometric views of an optical system implemented using a light-guide optical element (LOE), constructed and operative according to the teachings of the present invention, illustrating a top-down and a side-injection configuration, respectively;
FIGS. 2A and 2B are enlarged schematic isometric views of an LOE from FIG. 1A or 1B showing ray paths for two extreme fields of an image;
FIG. 2C is an overview of the combination of the fields of FIGS. 1A and 1B with additional fields to define an overall envelope of partially-reflecting surfaces that are needed to form a full image at an eye-motion box;
FIG. 2D is an alternative implementation of FIG. 2C in which the partially-reflecting surfaces are implemented selectively;
FIG. 2E is a view similar to FIG. 2D illustrating a variable spacing between the partially-reflecting surfaces;
FIG. 2F is a view similar to FIG. 2E illustrating regions of the LOE which can be trimmed;
FIGS. 3A and 3B are views similar to FIG. 2E illustrating a potential ray path for ghost formation with and without the presence of a partially-reflecting surface outside the required profile of partially-reflecting surfaces;
FIG. 4A is an enlarged schematic isometric view of a first region of an LOE from a further implementation of an LOE from FIG. 1A or 1B showing ray paths for two extreme fields;
FIG. 4B is a view similar to FIG. 4A showing a partial representation of the partially-reflecting surfaces with variable spacing between the partially-reflecting surfaces;
FIG. 4C is a view similar to FIG. 4B illustrating parts of the partially-reflecting surfaces required for the extremities of the field;
FIG. 5A is an enlarged schematic isometric view of an LOE including a first region similar to that of FIG. 4C implemented according to the principles illustrated above in relation to FIG. 2E;
FIG. 5B is a view similar to FIG. 5A illustrating regions of the LOE which can be trimmed;
FIGS. 6A-6D are schematic isometric views similar to FIG. 2A-2F illustrating the effects of various angular offset parameters; and
FIG. 7 is a schematic top view of a near-eye display illustrating angular offsets required for face-curve and convergence corrections according to an aspect of the present invention.

### DESCRIPTION OF THE PREFERRED EMBODIMENTS

Certain embodiments of the present invention provide an optical system including a light-guide optical element (LOE) for achieving optical aperture expansion for the purpose of a head-up display, and most preferably a near-eye display, which may be a virtual reality display, or more preferably an augmented reality display.

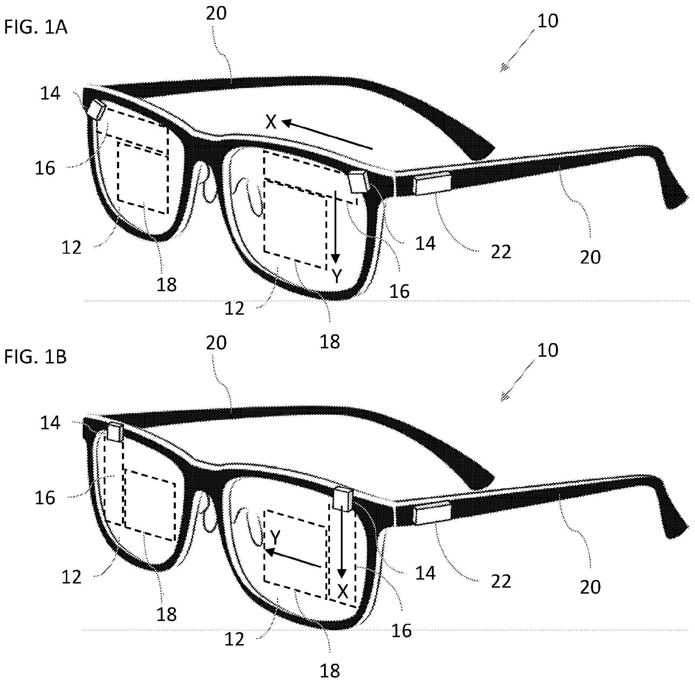

An exemplary implementation of a device in the form of a near-eye display, generally designated **10,** employing an LOE **12** according to the teachings of an embodiment of the present invention, is illustrated schematically in FIGS. 1A and 1B. The near-eye display **10** employs a compact image projector (or "POD") **14** optically coupled so as to inject an image into LOE (interchangeably referred to as a "waveguide," a "substrate" or a "slab") **12** within which the image light is trapped in one dimension by internal reflection at a set of mutually-parallel planar external surfaces. The light impinges of a set of partially-reflecting surfaces (interchangeably referred to as "facets") that are parallel to each other, and inclined obliquely to the direction of propagation of the image light, with each successive facet deflecting a proportion of the image light into a deflected direction, also trapped/guided by internal reflection within the substrate. This first set of facets are not illustrated individually in FIGS. 1A and 1B, but are located in a first region of the LOE designated **16.** This partial reflection at successive facets achieves a first dimension of optical aperture expansion.

In a first set of preferred but non-limiting examples of the present invention, the aforementioned set of facets are orthogonal to the major external surfaces of the substrate. In this case, both the injected image and its conjugate undergoing internal reflection as it propagates within region **16** are deflected and become conjugate images propagating in a deflected direction. In an alternative set of preferred but non-limiting examples, the first set of partially-reflecting surfaces are obliquely angled relative to the major external surfaces of the LOE. In the latter case, either the injected image or its conjugate forms the desired deflected image propagating within the LOE, while the other reflection may be minimized, for example, by employing angularly-selective coatings on the facets which render them relatively transparent to the range of incident angles presented by the image whose reflection is not needed.

The first set of partially-reflecting surfaces deflect the image illumination from a first direction of propagation trapped by total internal reflection (TIR) within the substrate to a second direction of propagation, also trapped by TIR within the substrate.

The deflected image illumination then passes into a second substrate region **18,** which may be implemented as an adjacent distinct substrate or as a continuation of a single substrate, in which a coupling-out arrangement (either a further set of partially reflective facets or a diffractive optical element) progressively couples out a proportion of the image illumination towards the eye of an observer located within a region defined as the eye-motion box (EMB), thereby achieving a second dimension of optical aperture expansion. The overall device may be implemented separately for each eye, and is preferably supported relative to the head of a user with the each LOE **12** facing a corresponding eye of the user. In one particularly preferred option as illustrated here, a support arrangement is implemented as an eye glasses frame with sides **20** for supporting the device relative to ears of the user. Other forms of support arrangement may also be used, including but not limited to, head bands, visors or devices suspended from helmets.

Reference is made herein in the drawings and claims to an X axis which extends horizontally (FIG. 1A) or vertically (FIG. 1B), in the general extensional direction of the first region of the LOE, and a Y axis which extends perpendicular thereto, i.e., vertically in FIG. 1A and horizontally in FIG. 1B.

In very approximate terms, the first LOE, or first region **16** of LOE **12,** may be considered to achieve aperture expansion in the X direction while the second LOE, or second region **18** of LOE **12,** achieves aperture expansion in the Y direction. The details of the spread of angular directions in which different parts of the field of view propagate will be addressed more precisely below. It should be noted that the orientation as illustrated in FIG. 1A may be regarded as a "top-down" implementation, where the image illumination entering the main (second region) of the LOE enters from the top edge, whereas the orientation illustrated in FIG. 1B may be regarded as a "side-injection" implementation, where the axis referred to here as the Y axis is deployed horizontally. In the remaining drawings, the various features of certain embodiments of the present invention will be illustrated in the context of a "top-down" orientation, similar to FIG. 1A. However, it should be appreciated that all of those features are equally applicable to side-injection implementations, which also fall within the scope of the invention. In certain cases, other intermediate orientations are also applicable, and are included within the scope of the present invention except where explicitly excluded.

The POD employed with the devices of the present invention is preferably configured to generate a collimated image, i.e., in which the light of each image pixel is a parallel beam, collimated to infinity, with an angular direction corresponding to the pixel position. The image illumination thus spans a range of angles corresponding to an angular field of view in two dimensions.

Image projector **14** includes at least one light source, typically deployed to illuminate a spatial light modulator, such as an LCOS chip. The spatial light modulator modulates the projected intensity of each pixel of the image, thereby generating an image. Alternatively, the image projector may include a scanning arrangement, typically implemented using a fast-scanning mirror, which scans illumination from a laser light source across an image plane of the projector while the intensity of the beam is varied synchronously with the motion on a pixel-by-pixel basis, thereby projecting a desired intensity for each pixel. In both cases, collimating optics are provided to generate an output projected image which is collimated to infinity. Some or all of the above components are typically arranged on surfaces of one or more polarizing beamsplitter (PBS) cube or other prism arrangement, as is well known in the art.

Optical coupling of image projector **14** to LOE **12** may be achieved by any suitable optical coupling, such as for example via a coupling prism with an obliquely angled input surface, or via a reflective coupling arrangement, via a side edge and/or one of the major external surface of the LOE. Details of the coupling-in configuration are not critical to the invention, and are shown here schematically as a non-limiting example of a wedge prism **15** applied to one of the major external surfaces of the LOE.

It will be appreciated that the near-eye display **10** includes various additional components, typically including a controller **22** for actuating the image projector **14,** typically employing electrical power from a small onboard battery (not shown) or some other suitable power source. It will be appreciated that controller **22** includes all necessary electronic components such as at least one processor or processing circuitry to drive the image projector, all as is known in the art.

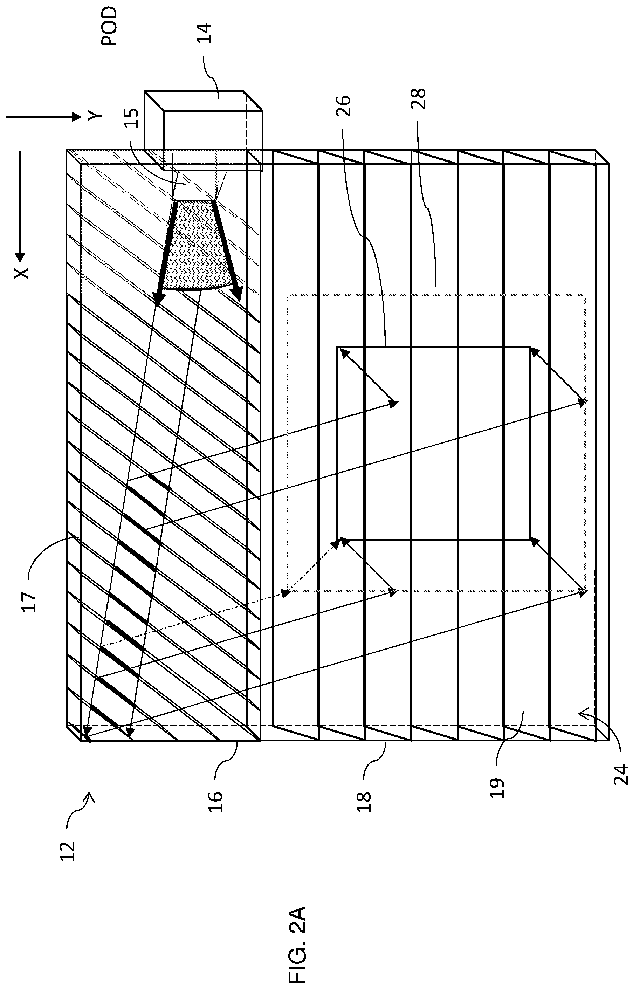

Turning now to FIGS. 2A-2F, the optical properties of an implementation of the near-eye display are illustrated in more detail. Specifically, there is shown a more detailed view of a light-guide optical element (LOE) **12** formed from transparent material, including a first region **16** containing a first set of planar, mutually-parallel, partially-reflecting surfaces **17** having a first orientation, and a second region **18** containing a second set of planar, mutually-parallel, partially-reflecting surfaces **19** having a second orientation non-parallel to the first orientation. A set of mutually-parallel major external surfaces **24** extend across the first and second regions **16** and **18** such that both the first set of partially-reflecting surfaces **17** and the second set of partially-reflecting surfaces **19** are located between the major external surfaces **24.** Most preferably, the set of major external surfaces **24** are a pair of surfaces which are each continuous across the entirety of first and second regions **16** and **18,** although the option of having a set down or a step up in thickness between the regions **16** and **18** also falls within the scope of the present invention. Regions **16** and **18** may be immediately juxtaposed so that they meet at a boundary, which may be a straight boundary or some other form of boundary, or there may be one or more additional LOE region interposed between those regions, to provide various additional optical or mechanical function, depending upon the particular application. Although the present invention is not limited to any particular manufacturing technique, in certain particularly preferred implementations, particularly high quality major external surfaces are achieved by employing continuous external plates between which the separately formed regions **16** and **18** are sandwiched to form the compound LOE structure.

The optical properties of the LOE may be understood by tracing the image illumination paths backwards. The second set of partially-reflecting surfaces **19** are at an oblique angle to the major external surfaces **24** so that a part of image illumination propagating within the LOE **12** by internal reflection at the major external surfaces from the first region **16** into the second region **18** is coupled out of the LOE towards an eye-motion box **26.** The first set of partially-reflecting surfaces **17** are oriented so that a part of image illumination propagating within the LOE **12** by internal reflection at the major external surfaces from the coupling-in region (coupling prism **15)** is deflected towards the second region **18.**

One dimension of the angular spread of the projected image from image projector **14** is represented in FIG. 2A by the cone of illumination spreading from the POD aperture on the right side of the LOE towards the left side of the LOE. In the non-limiting example illustrated here, the central optical axis of the POD defines a direction of propagation within the LOE aligned with the X axis, and the angular spread (within the LOE) is roughly ±16°. (It should be noted that the angular FOV becomes larger in air due to the change in refractive index.) The first set of partially-reflecting surfaces **17** are illustrated in first region **16,** and the second set of partially-reflecting surfaces **19** are illustrated in second region **18.**

The near-eye display is designed to provide a full field-of-view of the projected image to an eye of the user that is located at some position within the permitted range of positions designated by an "eye-motion box" (EMB) **26** (that is, a shape, typically represented as a rectangle, spaced away from the plane of the LOE from which the pupil of the eye will view the projected image). In order to reach the eye-motion box, light must be coupled-out from the second region **18** by the second set of partially-reflecting surfaces **19** towards the EMB **26.** In order to provide the full image field-of-view, each point in the EMB must receive the entire angular range of the image from the LOE. Tracing back the field-of-view from the EMB indicates a larger rectangle **28** from which relevant illumination is coupled-out of the LOE towards the EMB.

FIG. 2A illustrates a first extremity of the field of view, corresponding to the bottom-left pixel of the projected image. A beam of a width corresponding to the optical aperture of the projector as coupled into the LOE is shown propagating leftwards and upwards from the POD and being partially reflected from a series of partially-reflecting surfaces **17.** As illustrated here, only a subset of the facets generate reflections that are useful for providing the corresponding pixel in the image viewed by the user, and only a sub-region of those facets contribute to the observed image of this pixel. The relevant regions are illustrated by heavy black lines, and the rays corresponding to this pixel in the redirected image reflected from facets **17** and then coupled-out by facets **19** reaching the four corners of the EMB **26** are shown. Here and throughout the description, it will be noted that only the in-plane propagation directions of the rays are illustrated here during propagation within the LOE, but the rays actually follow a zigzag path of repeated internal reflection from the two major external surfaces, and one entire dimension of the image field of view is encoded by the angle of inclination of the rays relative to the major external surfaces, corresponding to the pixel position in the Y dimension. By way of one additional example, deflected and coupled-out rays corresponding to the top-left extremity of the image as viewed at the top-left corner of the EMB are shown in dash-dot lines.

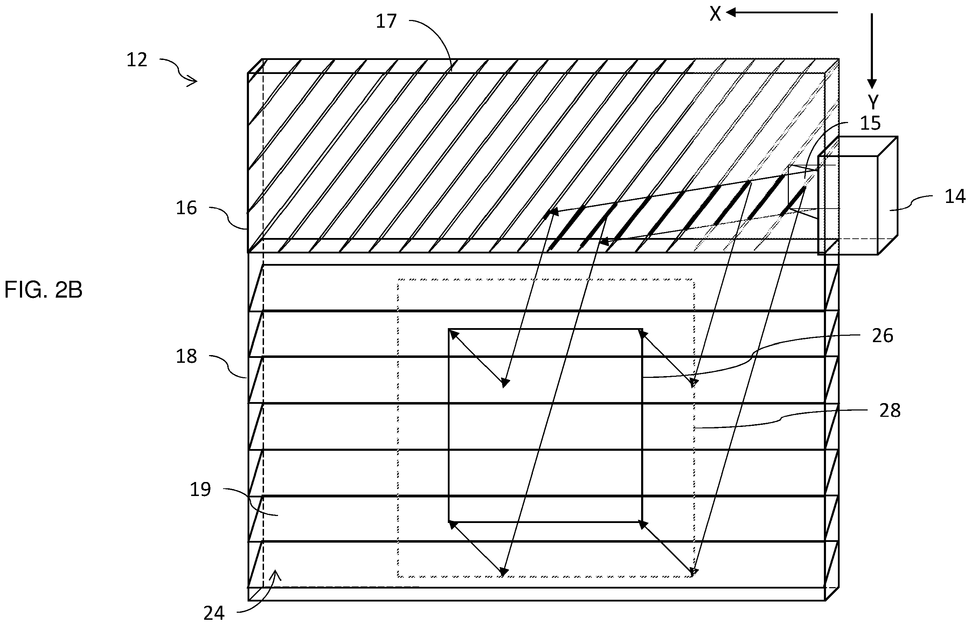

FIG. 2B illustrates the same configuration as FIG. 2A, but here shows the rays corresponding to the bottom-right pixel of the field-of-view reaching the four corners of the EMB, again with the relevant regions of the relevant partially-reflecting surfaces **17** denoted by a heavy line.

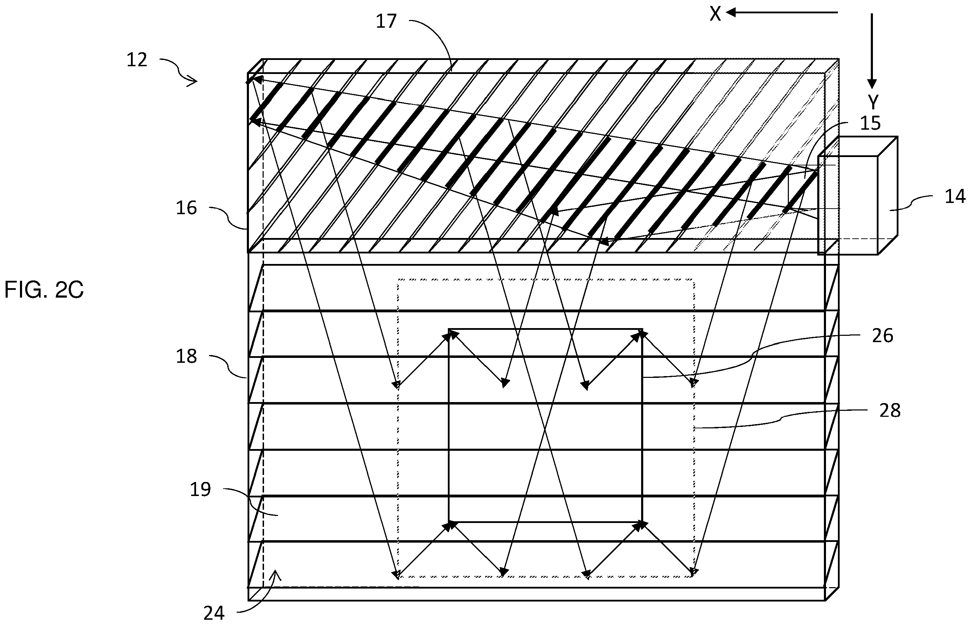

It will be apparent that, by additionally tracing correspond ray paths for all fields (directions or pixels) of the image reaching all regions of the EMB, it is possible to map out an envelope of all ray paths from the coupling-in region propagating within the LOE, deflected by one of the first set of partially-reflecting surfaces and coupled out by one of the second set of partially-reflecting surfaces in a direction reaching the eye-motion box, and this envelope defines an "imaging area" of each facet **17** which is needed for deflecting part of the image illumination which contributes to the image reaching the EMB, while the remainder of the facet **17** lying outside the envelope is a "non-imaging area" which does not contribute to the required image. A simplified outline of this envelope corresponding to the "imaging areas" of all of the facets **17** is shown in heavy lines in FIG. 2C.

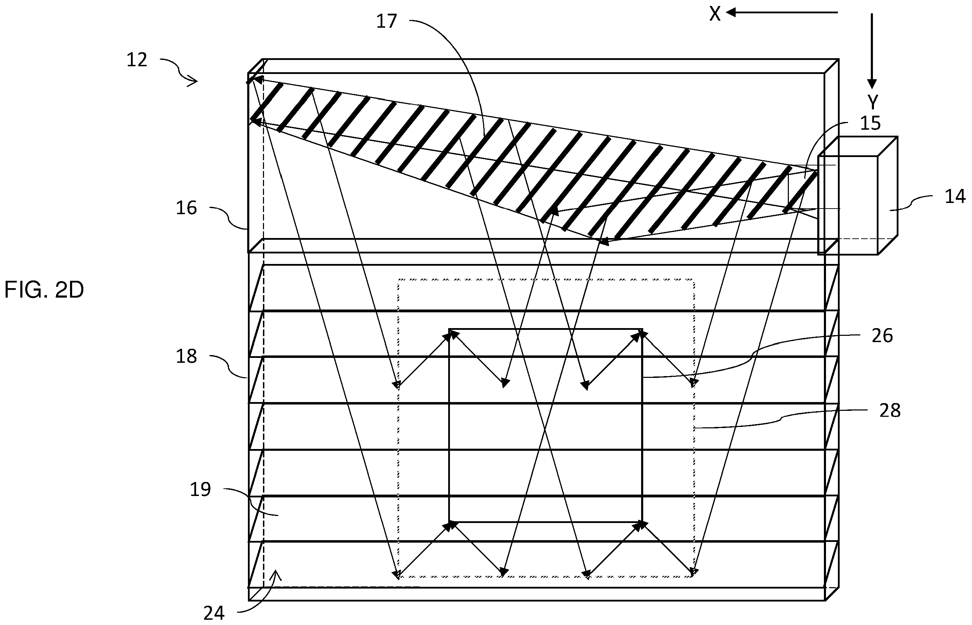

According to the present invention, facets **17** are implemented as "partial facets" such that the partially-reflecting properties are only present within a subregion of the cross-sectional area of region **16** which includes the "imaging area" of each facet plane, and preferably excludes at least the majority of the "non-imaging area" for some or all of the facets. Such an implementation is illustrated schematically in FIG. 2D. The active (partially-reflecting) area of the facets preferably extends slightly beyond the minimum required to complete the geometrical requirements for the EMB image projection in order to avoid anomalies that may be caused by imperfections at the edges of coatings, and the facets may also be further extended in some cases due to additional considerations relating to integer numbers of overlaps between facets in the deflected image direction to achieve improved image uniformity. According to certain particularly preferred implementations, the distance of the furthest partially-reflecting facet encountered along a line from the coupling-in location progressively increases with increasing angle clockwise as shown, away from the boundary with the second region **18** over a majority of the angular range of the image projected from projector **14.**

Where first region **16** is formed from a stack of coated plates which are then cut at an appropriate angle (as described for example in PCT Patent Publication No. WO2007054928A1, and as known in the art), the selective spatial deployment of the partially-reflecting surfaces can advantageously be achieved be forming a stack of plates with a partially-reflecting coating located over a first part of the interface plane between two plates, while a second part of the interface plane is bonded (typically with index-matched adhesive and without coatings) so as to form an optical continuum between the two plates. Selective application of the partially-reflecting coatings is typically achieved by applying a suitable masking layer prior to the coating process, and removing the masking layer at the end of the coating process.

According to an alternative production technique, a stack of full area-coated plates may be formed and then cut to the shape required for the volume containing facets (e.g., corresponding to the regions with facets as shown in FIG. 2D).The required form of the LOE is then completed by optically bonding this irregular block containing the partially-reflecting facets together with complementary blocks of plain index-matched glass.

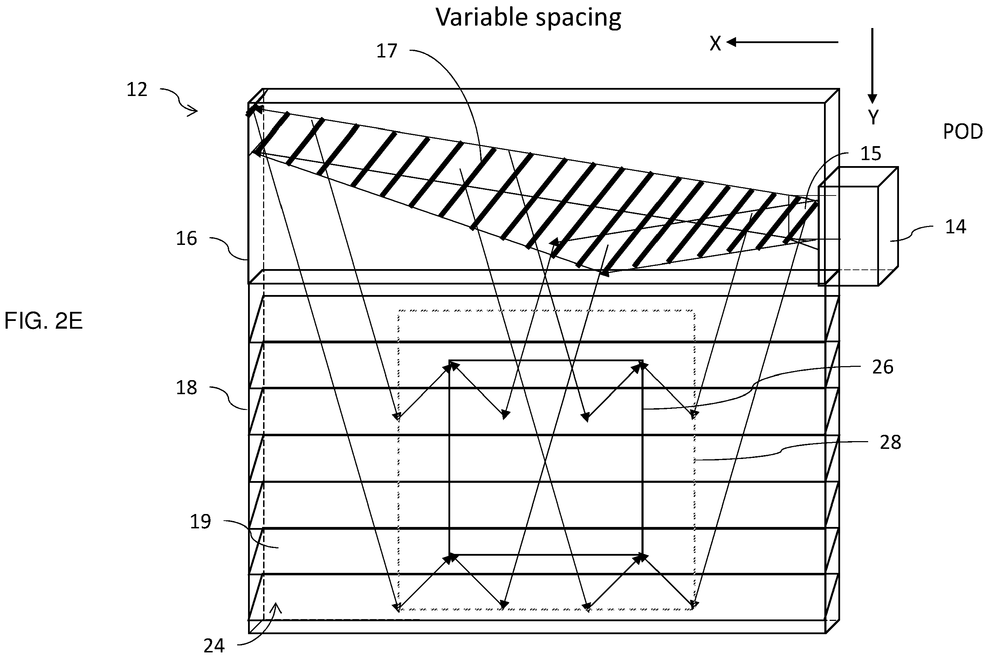

FIG. 2E is similar to FIG. 2D, but illustrates an optical system in which the first set of partially-reflecting surfaces **17** have a non-uniform spacing between the planes of the surfaces such that a spacing between adjacent partially-reflecting surfaces proximal to the coupling-in region is smaller than a spacing between adjacent partially-reflecting surfaces further from the coupling-in region. This variable spacing is preferred in many cases to enhance uniformity of the projected image, as will be explained further below.

The optical axis is not actually parallel to the X axis but rather lies in the X-Z plane, with a Z-component into the page chosen such that the entire range of angles in the depth dimension of the FOV undergo total internal reflection at the major substrate surfaces. For simplicity of presentation, the graphic representations herein, and the description thereof, will relate only to the in-plane (X-Y) component of the light ray propagation directions, referred to herein as the "in-plane component" or the "component parallel to the major external surfaces of the LOE."

It will be noted that the uppermost ray direction of the field of view corresponds to the left side of the field of view reaching the observer's eye, while the lowest ray direction corresponds to the right side of the field of view. It will also be noted that some reflections of the left side of the field of view are reflected from facets near the right side of the LOE in a direction that will not reach the EMB, and will therefore be lost. Similarly, some rays from the right side of the field of view are reflected from facets near the left of the LOE and are deflected in a direction which will not reach the EMB, and will therefore be lost. Certain aspects of the present invention take advantage of these observations to reduce the dimensions (and hence volume and weight) of the first LOE (or LOE region).

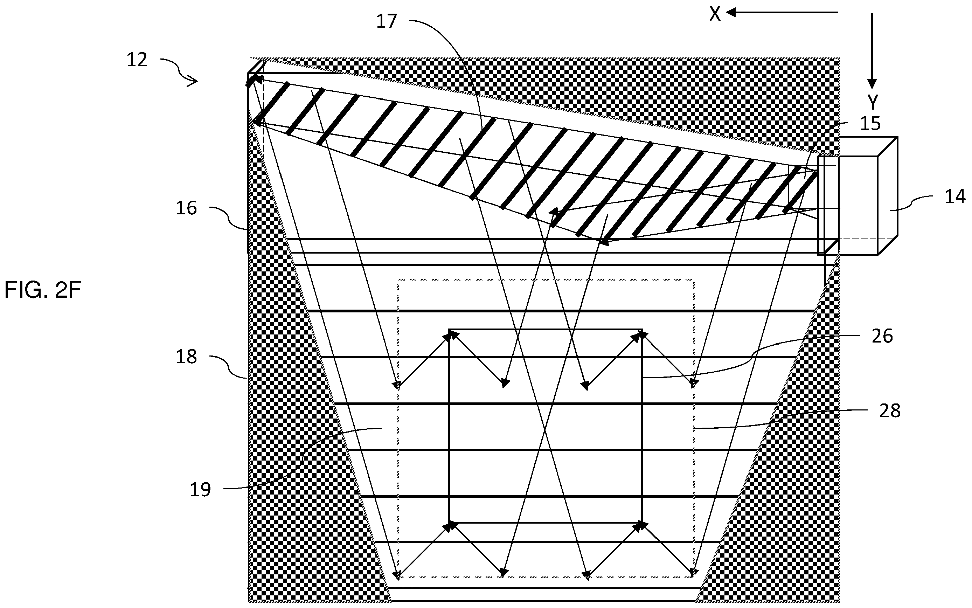

Specifically, FIG. 2F illustrates with shading various regions of FIG. 2E which do not contribute to the image reaching the EMB, and are therefore available to be truncated without interfering with image projection to the user's eye. It is also noted that the optical aperture for injection of the image from the image projector is in the lower half of the first region **16** of LOE **12,** since the part of the image corresponding to the downward-angled rays as shown corresponds to the right side of the image field of view, which does not need to be reflected from facets nearer the left part of first region **16.** This allows for a relatively compact implementation of the first region **16** of LOE **12.** Specifically, the extent of the LOE below the POD optical axis is chosen such that the rays from the POD aperture corresponding to the right-most pixels of the field of view reach the facets from which they are deflected towards the entire area of the EMB, but the facets are shortened in regions where such angles can no longer reach the EMB. The reduction in height of first region **16** results also in a small reduction in the X dimension, since the reduction of the LOE height brings the facets closer to the EMB, and therefore reduces the required X dimension to cover the desired range of angles for the FOV. Here and elsewhere in this document, it will be noted that the terms "trimmed" and "truncated" are used to refer to geometries or dimensions of a final product that are reduced relative to the theoretical starting point of the implementation, for example, of FIG. 2A as a point of reference. This terminology does not carry any implementation of physically cutting away material or any other particular production technique. It is not necessarily envisaged that the LOE would be truncated exactly along the border of the indicated regions, but rather that these regions provide design flexibility, allowing the LOE to be finished with whatever arbitrary outer contour is considered esthetically preferred and/or mechanically compatible with additional details of a desired application.

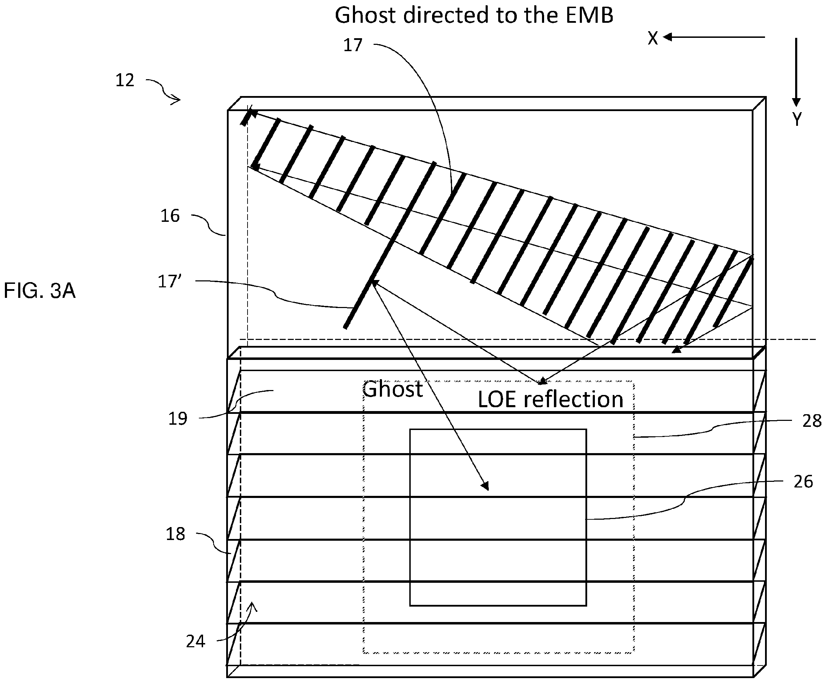

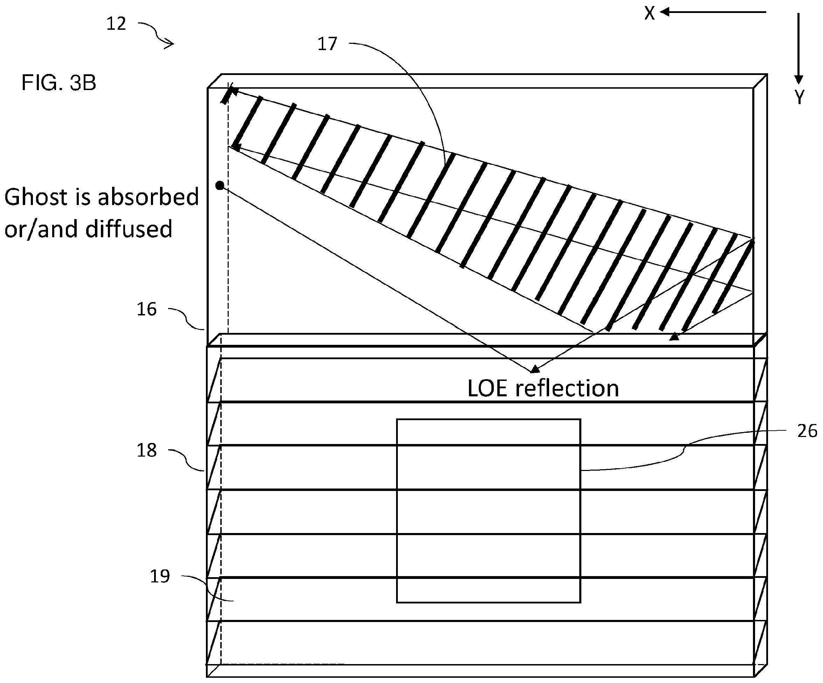

It will be noted that the use of partial facets as described above with reference to FIGS. 2D-2F may provide one or more of a number of advantages, including improved efficiency and brightness where transmission of the image from the facets further from the coupling-in region does not need to pass through so many additional facets before reaching the second LOE region. An additional advantage is illustrated here with reference to FIGS. 3A and 3B.

Specifically, FIG. 3A illustrates a region of a facet labeled **17',** outside the envelope of facet regions required for transferring the projected image to the EMB. (This facet would normally be one among many, but has been illustrated here in isolation in order to more easily explain its significance.) FIG. 3A illustrates a ray path originating at the image projector for a downwards-directed image ray which passes directly through the partially-reflecting surfaces. This ray proceeds (propagating by total internal reflection) into second region **18** where it is incident on one of the second set of partially-reflecting surfaces **19** and is partially reflected as shown to generate an unwanted "ghost" reflection propagating back upwards into the first region **16.** The angle of this ray is such that it may be reflected from the continuation of facet **17'** in a direction towards the EMB **24,** where it may form a visible ghost which interferes with the viewed image.

FIG. 3B illustrates by contrast what happens to the same ghost ray path in the event that the facets are only deployed in a reduced region at or near the regions required to form the output image. In this case, the ray reflected from the surface **19** and directed back up into the first region **16** does not encounter any partially-reflective surface as it propagates through the first region of the LOE. As a result, the ray continues until it reaches an outer edge of the LOE, where it is preferably absorbed or diffused by a suitable prepared non-reflective surface.

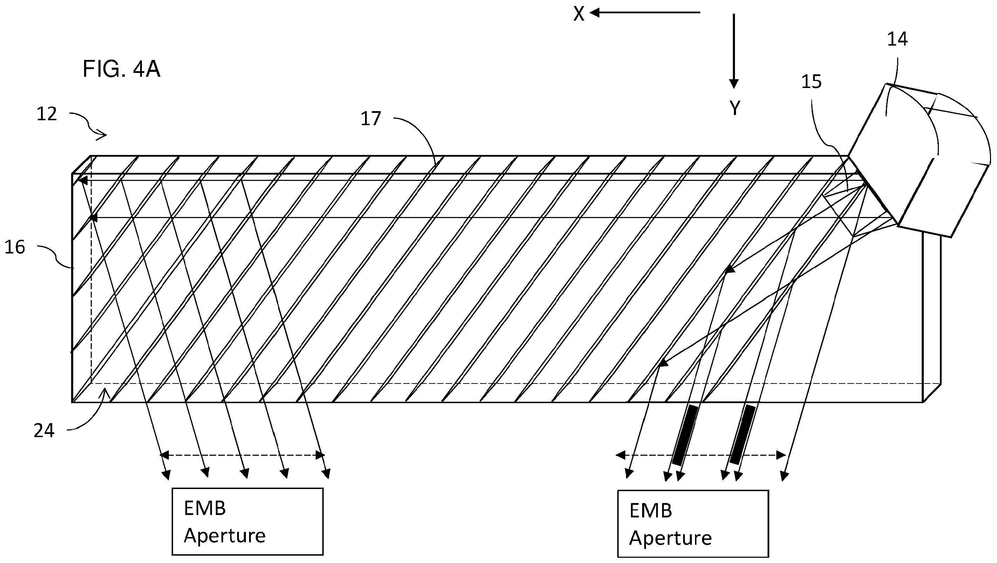

In the example of FIGS. 2A-2F, the dimension of the first LOE region **16** above the optical axis of the POD **14** cannot be reduced significantly, since the left-most region of the FOV must be reflected from facets at the left-most extreme of the LOE. FIGS. 4A-5B shows an alternative approach according to a further feature of certain particularly preferred implementations of the present invention which allows a further reduction in the dimensions of the first LOE region **16.**

Specifically, in the arrangement of FIG. 4A, the POD and/or the coupling-in prism are rotated such that the central optical axis of the image projection is angled downwards across the first LOE region **16,** with the angle most preferably chosen such that the left-most extremity of the FOV is projected roughly parallel to the X axis. In this case, the coupling-in of the POD is preferably at or near the upper extremity (typically in the top third) of the first LOE region **16.** The required dimension of the LOE below the POD aperture is dictated by geometrical considerations similar to those described with reference to FIGS. 2A-2F, namely, that all rays of the image should encounter facets appropriately positioned and angled so as to deliver the corresponding region of the projected FOV to the entire EMB. The right-most rays in this case descend at a steeper angle, and the facet angles are adjusted accordingly, but the overall Y dimension of the first LOE is still further reduced.

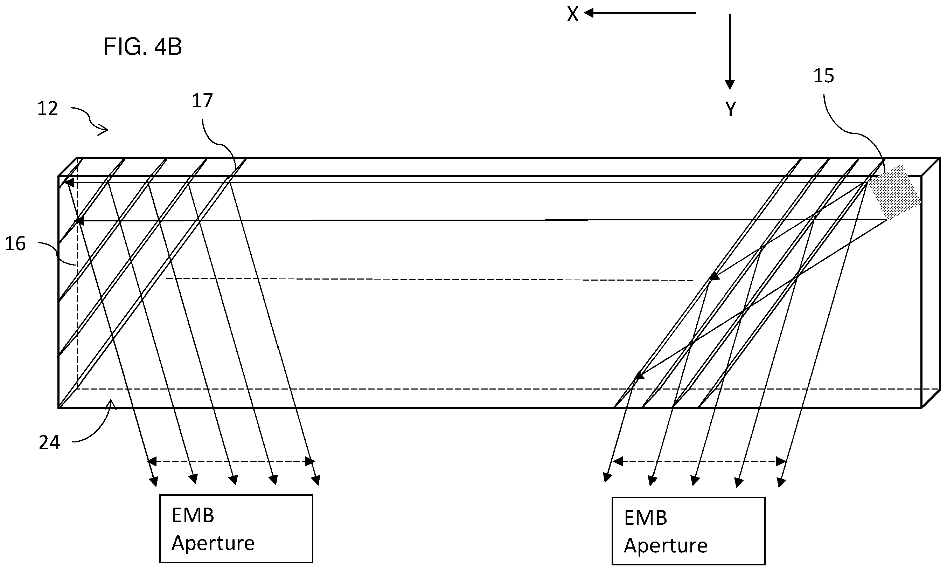

In some cases, and as particularly emphasized by the steeper angles illustrated at the right side of the field of view in FIG. 4A, the geometrical requirements to "fill" the EMB require significantly different facet spacing between the right and left sides of the field of view. Thus, in the example illustrated in FIG. 4A, for a coupled-in optical aperture width as shown, the left-side field is effectively filled by one side of the pixel beam reflected from one facet coinciding with the other side of the beam reflected from the adjacent facet. On the right side of the field however, the uniform facet spacing as illustrated would result in "black lines" (illustrated here as thick black lines) within which no image illumination is present. If the facet spacing were uniformly decreased, this would lead to the converse problem of bright stripes near the left side of the field. To address this problem, a variable facet spacing is preferred, as illustrated by the partial set of facets shown in FIG. 4B with the corresponding geometrical constructs to show how the facet spacing is correctly adjusted to provide image illuminations "filling" the EMB for each extremity of the field of view. The facet spacing preferably varies progressively (although not necessarily continuously or linearly) across the LOE region **16.**

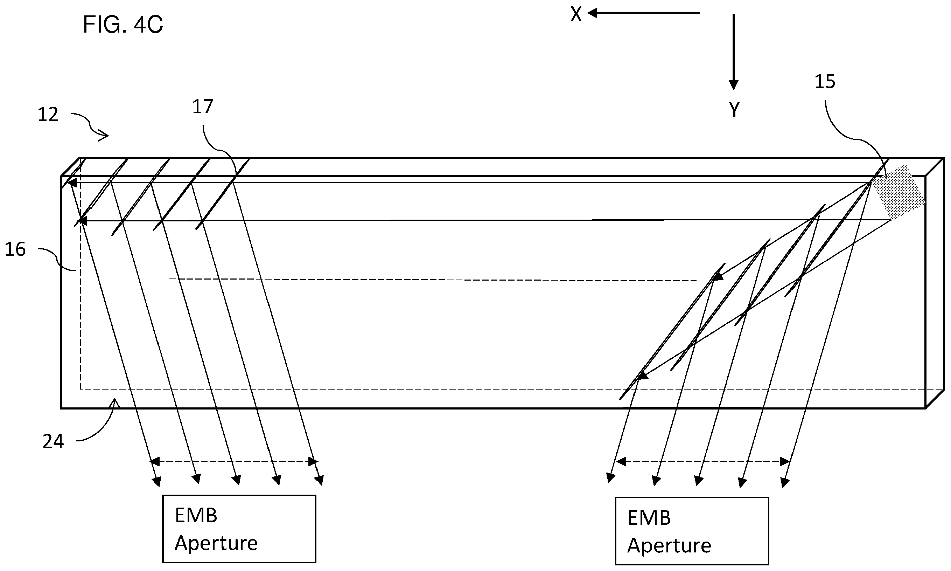

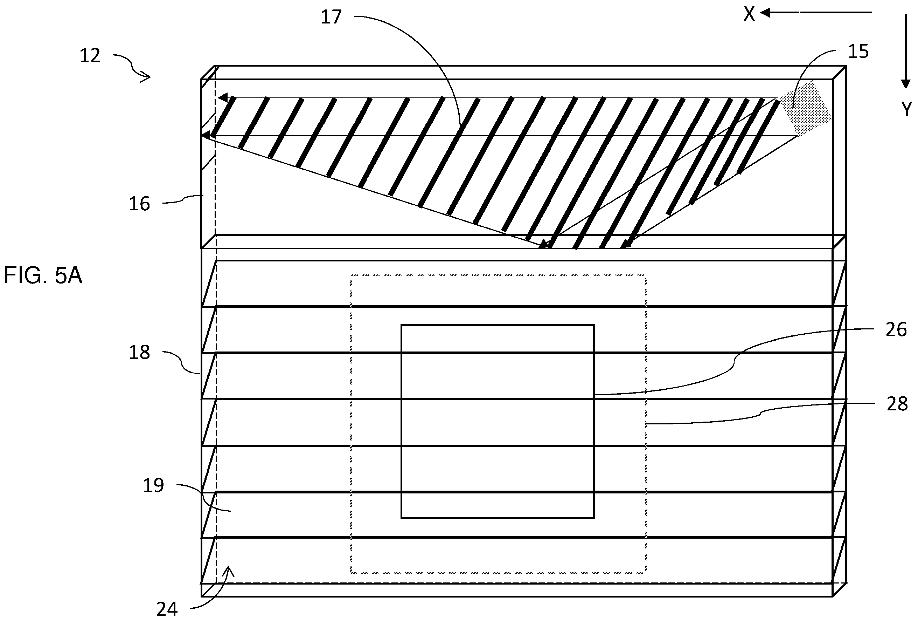

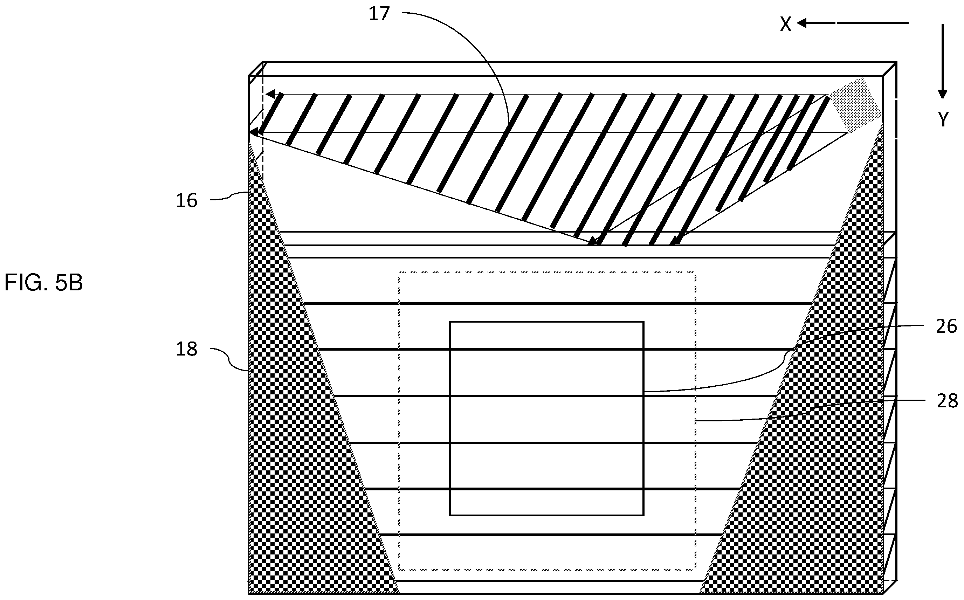

As described above with reference to FIGS. 2A-2E, it is possible to identify the regions of the various facets which are required to provide partial reflections in order to fill the EMB image for each field (pixel) of the image, as is illustrated for two extreme fields in FIG. 4C. Here too, by defining an "envelope" including all regions of all facets which are required to provide the output image at the eye-motion box **26,** it is possible to implement first region **16** of the LOE **12** with selectively deployed partially-reflecting surfaces which vary in their extent across the first region, in a manner fully analogous in structure and function to that described above with reference to FIGS. 2D and 2E. A corresponding implementation of the overall optical system for this case is illustrated in FIG. 5A. FIG. 5B illustrates various additional regions of the first and second LOE's which do not contribute to the image transmission and can, according to the needs of each particular application, be trimmed away further as shown.

Thus, by deploying the image projector **14** with an in-plane component of the optical axis of the propagating image inclined relative to the X axis towards a boundary of the second region **18,** and most preferably, ensuring that an in-plane component of one extremity of the field of view of the propagating image is substantially parallel to the X axis, it is possible to achieve further compactness of the overall configuration compared to that of FIGS. 2A-2F. In all other respects, the structure, function and range of options for implementing the device of FIGS. 4A-5B are as described above with reference to FIGS. 2A-3B.

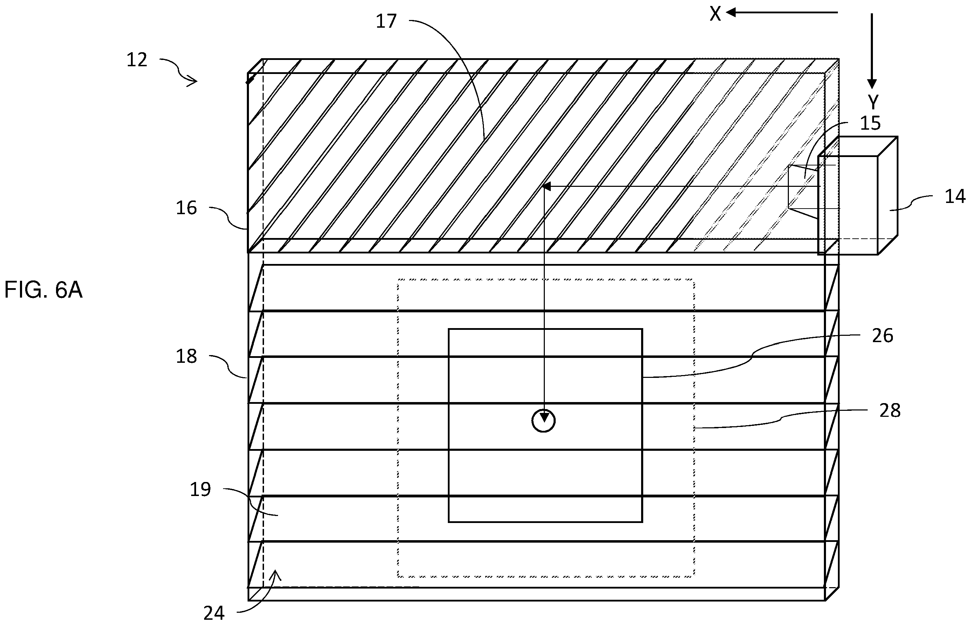

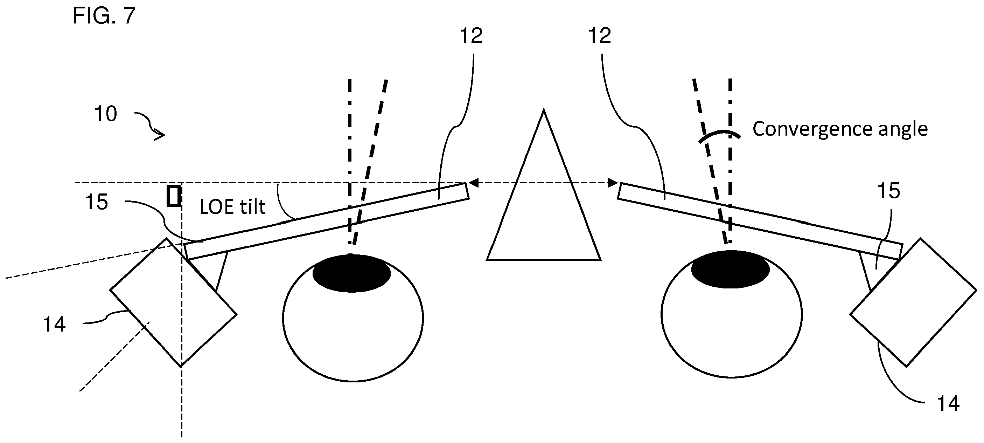

In addition to the inclination of the optical axis direction of the image projector described in FIGS. 4A-5B, a number of other angular parameters may be used to achieve various adjustments to the properties of the optical system. Various examples of this will now be illustrated with reference to FIGS. 6A-6D and 7.

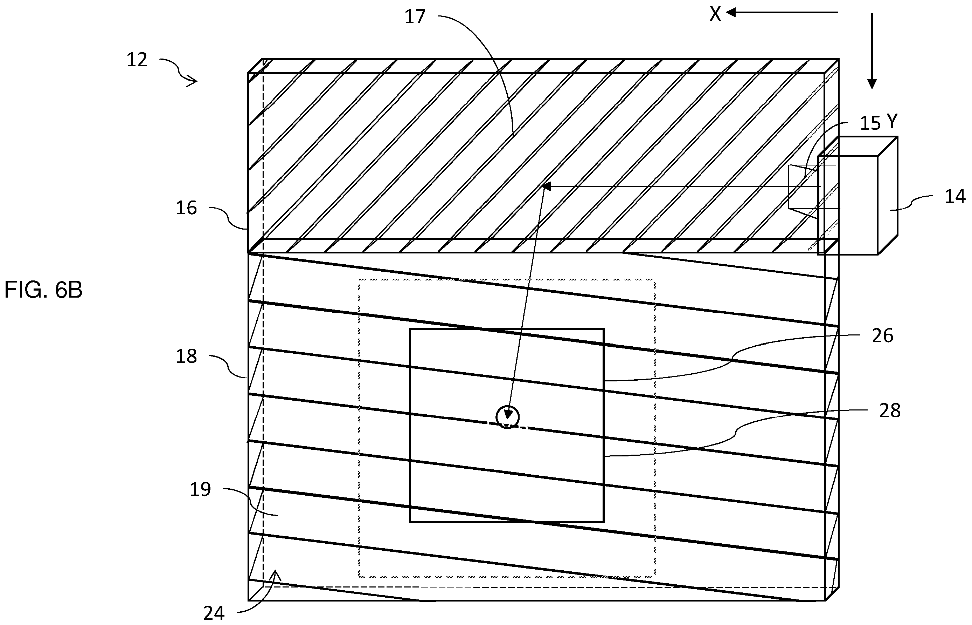

Referring first to FIGS. 6A and 6B, these illustrate a geometrical principle underlying adjustment of the eye-motion box location across the width dimension of the second region of the LOE **12.** In FIG. 6A, an arrangement equivalent to FIGS. 2A-2F is shown, with a ray path corresponding to a central ray of the image as viewed from a center of the eye-motion box. This results in central positioning of the EMB.

FIG. 6B illustrates the effect of implementing the second region **18** of LOE **12** with facets **19** angularly offset relative to the X axis. In this case, the ray that forms the center of the field at the center of the eye-motion box is shifted, resulting in a horizontally displaced eye-motion box, useful where asymmetrical deployment of the EMB relative to the LOE is required. In this context, the "extensional direction" of a facet is taken to be a line of intersection of a facet with a plane parallel to the major external surfaces of the LOE. An equivalent definition is a line of intersection between a plane containing the partially-reflecting surface and the major external surface. This line is referred to herein as the extensional direction of the facet parallel to the major external surfaces, or the "in-plane" extensional direction. The extent of the "angular offset" relative to the X axis in this context depends on the extent of the horizontal shift required, but for certain preferred cases, may be in the range of 5-25 degrees, although both smaller and larger angular offsets are possible.

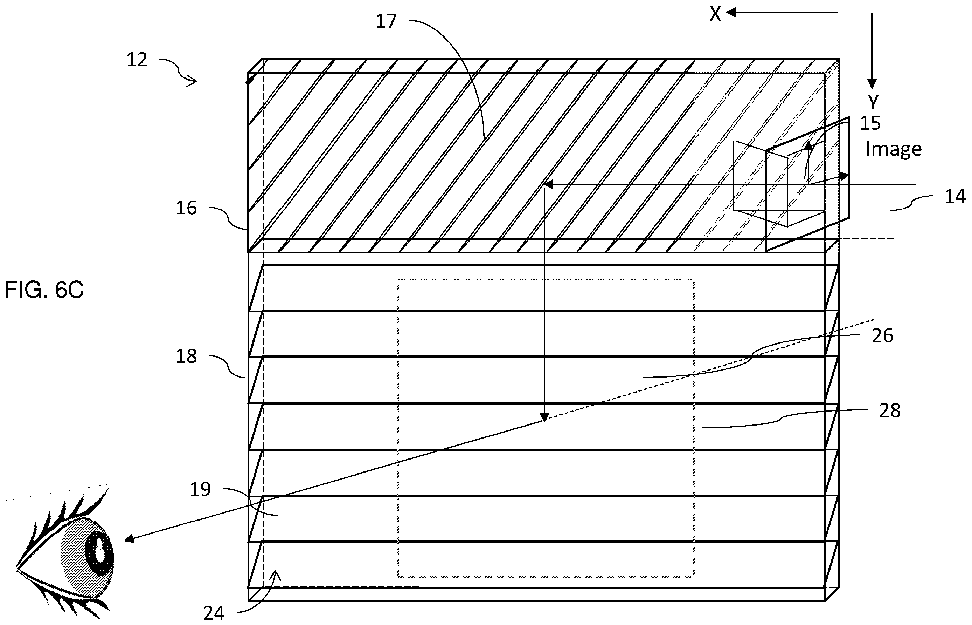

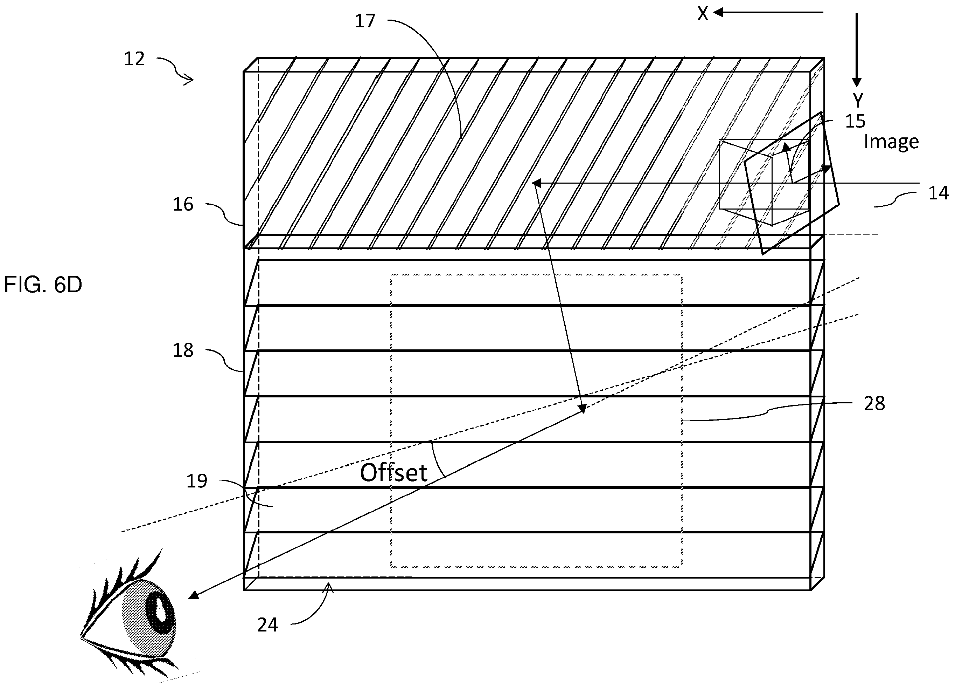

Turning to FIGS. 6C and 6D, this illustrates a further form of adjustment which allows correction for "face curvature" and/or convergence angle, as indicated in FIG. 7. Specifically, FIG. 7 shows schematically a top view of a near-eye display in which the LOEs are deployed with a tilt relative to each other, allowing them to be mounted in a "wrap-around" frame which is shaped to follow (to some extent) a side-to-side curvature of the face. In order to achieve stereo vision in such a configuration, it is necessary to correct for the face curvature so that the images are presented centered along parallel lines in space (dash-dot lines in FIG. 7), which are offset horizontally relative to the perpendicular to the LOE. Additionally, or alternatively, in various applications, particularly although not exclusively for indoor use, it is desirable to provide a convergence angle between the two displays so that objects viewed binocularly through the display appear to be localized at a desired direction from the user. This correction also requires a deflection from the normal to the LOE plane with a component in the horizontal (X axis) direction.

To achieve this correction, image projector **14** and the first set of partially-reflecting surfaces **17** are oriented so that the propagating image coupled in to the LOE from image projector **14** is deflected by facets **17** to generate a deflected propagating image propagating with an in-plane component of the optical axis inclined relative to the Y axis. A result of this offset, after coupling out by facets **19,** is that the optical axis of the coupled-out image is deflected in a horizontal plane, i.e., is inclined relative to a normal to the major external surface with a non-zero component of inclination along an in-plane extensional direction of the second set of partially-reflecting surfaces, as illustrated in FIG. 6D.

Although these adjustments have been presented as independent adjustments, it should be noted that the various parameters of projector optical axis inclination, first LOE region facet angle and second LOE region facet angle are interrelated, and a variation of one of these parameters will typically require corresponding adjustments in the other parameters in order to ensure transmission of the entire field of view, and that these adjustments may result in a rotation of the injected image about its central axis, which may be corrected directly by rotation of the projector and/or coupling arrangement as illustrated schematically in FIG. 6D.

As mentioned above in the context of FIG. 1B, all of the above principles can also be applied to "sideway" configurations, where an image is injected from a POD located laterally outside the viewing area and is spread by a first set of facets vertically and then by a second set of facets horizontally for coupling into the eye of the user. All of the above-described configurations and variants should be understood to be applicable also in a side-injection configuration.

Throughout the above description, reference has been made to the X axis and the Y axis as shown, where the X axis is either horizontal or vertical, and corresponds to the first dimension of the optical aperture expansion, and the Y axis is the other major axis corresponding to the second dimension of expansion. In this context, X and Y can be defined relative to the orientation of the device when mounted on the head of a user, in an orientation which is typically defined by a support arrangement, such as the aforementioned glasses frame of FIGS. 1A and 1B. Other terms which typically coincide with that definition of the X axis include: (a) at least one straight line delimiting the eye-motion box, that can be used to define a direction parallel to the X axis; (b) the edges of a rectangular projected image are typically parallel to the X axis and the Y axis; and (c) a boundary between the first region **16** and the second region **18** typically extends parallel to the X axis.

It will be appreciated that the above descriptions are intended only to serve as examples, and that many other embodiments are possible within the scope of the present invention as defined in the appended claims.

## Claims

1. An optical system for directing image light from a projector (14) to an eye-motion box (26) for viewing by an eye of a user, the optical system comprising:
- a lightguide configuration (12) having a pair of mutually parallel major external surfaces for supporting propagation of image light by internal reflection at said major surfaces; and
- a coupling-in arrangement (15) configured to couple in image light from the projector (14) into said lightguide configuration (12) so as to propagate in a first in-plane direction within said lightguide configuration by internal reflection at said major external surfaces,
said lightguide configuration (12) comprising:
- a first lightguide component (16) formed from a sequence of transparent plates sequentially bonded together at a set of planar, mutually-parallel interfaces (17), each interface being provided with a partially-reflecting coating, said interfaces being oriented so as to progressively deflect the image light propagating within said lightguide configuration in the first in-plane direction so as to propagate in a second in-plane direction within said lightguide configuration by internal reflection at said major external surfaces;
- a second lightguide component (18) having a coupling-out configuration for progressively coupling out image light propagating in the second in-plane direction towards the eye of the user;
**characterized in that**:
- said first lightguide component (16) occupies a non-rectangular subregion of an area of said lightguide configuration such that said interfaces define partial facets; and **in that**
- said lightguide configuration (12) further comprises a clear lightguide component interposed between said first lightguide component (16) and said second lightguide component (18), said clear lightguide component being a complementary block of plain index-matched glass,
- wherein said first lightguide component (16), said second lightguide component (18) and said clear lightguide component are combined into said lightguide configuration (12) as a continuous planar lightguide bounded by said pair of mutually parallel major surfaces so that the image light propagating from the coupling-in in the first in-plane direction is progressively redirected by the partially-reflecting coatings of said interfaces (17) so as to propagate in the second direction towards the second lightguide component (18), at least part of the redirected image light passing through said clear lightguide component,
- and wherein a boundary of said first lightguide component (16) includes a first straight edge and a boundary of said second lightguide component (18) includes a second straight edge, said clear lightguide component being bounded at least in part by a third straight edge which is optically bonded to said first straight edge and a fourth straight edge which is optically bonded to said second straight edge, said third and fourth straight edges having an acute angle therebetween.

2. The optical system of claim 1, wherein the boundary of said first lightguide component (16) is non-rectangular.

3. The optical system of any of previous claims, wherein the boundary of said first lightguide component (16) further comprises a fifth straight edge colinear with said fourth straight edge, said fifth straight edge being optically bonded to said second straight edge.

4. The optical system of any of previous claims, wherein said coupling-out configuration is implemented as a second set of planar, mutually-parallel interfaces within said second lightguide component (18), each interface of said second set of interfaces being provided with a partially-reflecting coating (19), said second set of interfaces being oriented obliquely to said major surfaces so as to progressively couple out the image light propagating within said lightguide configuration in the second in-plane direction towards the eye of the user.

5. The optical system of claim 4, wherein lines of intersection of planes containing said second set of interfaces with said major surfaces extend parallel to said second straight edge.

6. The optical system of claim 4, wherein lines of intersection of planes containing said second set of interfaces with said major surfaces are inclined relative to said second straight edge.

7. A head-mounted display comprising the optical system of any of the previous claims, a support arrangement (20) configured to support the lightguide configuration (12) on the head of the user with one of the major surfaces facing the eye and with a horizontal axis of the lightguide configuration parallel to a line between the user's pupils, and an image projector (14) optically coupled to said lightguide configuration (12) so as to introduce a collimated image to propagate in a first direction within the lightguide configuration by internal reflection, wherein the lightguide configuration (12) includes a second set of mutually-parallel planar partially-reflecting surfaces (19) deployed to progressively couple out light, and wherein a direction of elongation of said second set is oblique to said horizontal axis.

8. The head-mounted display of claim 7, wherein said first set of partially-reflecting surfaces (17) are angled so that said second direction is substantially perpendicular to said direction of elongation of said second set of partially-reflecting surfaces (19).

## Patentansprüche

1. Optisches System zum Lenken von Bildlicht von einem Projektor (14) zu einer Augenbewegungsbox (26) zur Betrachtung durch ein Auge eines Benutzers, wobei das optische System Folgendes umfasst:
- eine Lichtleiterkonfiguration (12), aufweisend ein Paar von zueinander parallelen Hauptaußenflächen zum Unterstützen der Ausbreitung von Bildlicht durch innere Reflexion an den Hauptflächen; und
- eine Einkoppelanordnung (15), die dazu konfiguriert ist, Bildlicht von dem Projektor (14) in die Lichtleiterkonfiguration (12) einzukoppeln, sodass sich das Bildlicht innerhalb der Lichtleiterkonfiguration durch innere Reflexion an den Hauptaußenflächen in einer ersten Richtung in der Ebene ausbreitet,
wobei die Lichtleiterkonfiguration (12) Folgendes umfasst:
- eine erste Lichtleiterkomponente (16), die aus einer Abfolge von transparenten Platten gebildet ist, die nacheinander an einem Satz von ebenen, zueinander parallelen Grenzflächen (17) miteinander verbunden sind, wobei jede Grenzfläche mit einer teilweise reflektierenden Beschichtung versehen ist, wobei die Grenzflächen derart ausgerichtet sind, dass sie das sich innerhalb der Lichtleiterkonfiguration in der ersten Richtung in der Ebene ausbreitende Bildlicht fortschreitend ablenken, sodass sich das Bildlicht innerhalb der Lichtleiterkonfiguration durch innere Reflexion an den Hauptaußenflächen in einer zweiten Richtung in der Ebene ausbreitet;
- eine zweite Lichtleiterkomponente (18), aufweisend eine Auskoppelkonfiguration zum fortschreitenden Auskoppeln von sich in der zweiten Richtung in der Ebene ausbreitendem Bildlicht in Richtung des Auges des Benutzers;
**dadurch gekennzeichnet, dass**:
- die erste Lichtleiterkomponente (16) einen nicht rechteckigen Teilbereich einer Fläche der Lichtleiterkonfiguration einnimmt, sodass die Grenzflächen Teilfacetten definieren; und dadurch, dass
- die Lichtleiterkonfiguration (12) ferner eine klare Lichtleiterkomponente umfasst, die zwischen der ersten Lichtleiterkomponente (16) und der zweiten Lichtleiterkomponente (18) eingefügt ist, wobei die klare Lichtleiterkomponente ein komplementärer Block aus einfachem brechungsindexangepasstem Glas ist,
- wobei die erste Lichtleiterkomponente (16), die zweite Lichtleiterkomponente (18) und die klare Lichtleiterkomponente als ein durchgehender ebener Lichtleiter, der durch das Paar von zueinander parallelen Hauptflächen begrenzt ist, zu der Lichtleiterkonfiguration (12) kombiniert sind, sodass das sich von der Einkopplung in der ersten Richtung in der Ebene ausbreitende Bildlicht durch die teilweise reflektierenden Beschichtungen der Grenzflächen (17) fortschreitend umgelenkt wird, sodass sich das Bildlicht in der zweiten Richtung zu der zweiten Lichtleiterkomponente (18) hin ausbreitet, wobei zumindest ein Teil des umgelenkten Bildlichts durch die klare Lichtleiterkomponente hindurchtritt,
- und wobei eine Begrenzung der ersten Lichtleiterkomponente (16) eine erste gerade Kante einschließt und eine Begrenzung der zweiten Lichtleiterkomponente (18) eine zweite gerade Kante einschließt, wobei die klare Lichtleiterkomponente zumindest teilweise durch eine dritte gerade Kante, die optisch mit der ersten geraden Kante verbunden ist, und eine vierte gerade Kante, die optisch mit der zweiten geraden Kante verbunden ist, begrenzt ist, wobei die dritte und die vierte gerade Kante einen spitzen Winkel zwischen sich aufweisen.

2. Optisches System nach Anspruch 1, wobei die Begrenzung der ersten Lichtleiterkomponente (16) nicht rechteckig ist.

3. Optisches System nach einem der vorhergehenden Ansprüche, wobei die Begrenzung der ersten Lichtleiterkomponente (16) ferner eine fünfte gerade Kante umfasst, die kollinear mit der vierten geraden Kante ist, wobei die fünfte gerade Kante optisch mit der zweiten geraden Kante verbunden ist.

4. Optisches System nach einem der vorhergehenden Ansprüche, wobei die Auskoppelkonfiguration als ein zweiter Satz von ebenen, zueinander parallelen Grenzflächen innerhalb der zweiten Lichtleiterkomponente (18) ausgeführt ist, wobei jede Grenzfläche des zweiten Satzes von Grenzflächen mit einer teilweise reflektierenden Beschichtung (19) versehen ist, wobei der zweite Satz von Grenzflächen derart schräg zu den Hauptflächen ausgerichtet ist, dass er das sich innerhalb der Lichtleiterkonfiguration in der zweiten Richtung in der Ebene ausbreitende Bildlicht fortschreitend in Richtung des Auges des Benutzers auskoppelt.

5. Optisches System nach Anspruch 4, wobei Schnittlinien von Ebenen, die den zweiten Satz von Grenzflächen enthalten, mit den Hauptflächen parallel zu der zweiten geraden Kante verlaufen.

6. Optisches System nach Anspruch 4, wobei Schnittlinien von Ebenen, die den zweiten Satz von Grenzflächen enthalten, mit den Hauptflächen relativ zu der zweiten geraden Kante geneigt sind.

7. Kopfmontierte Anzeige, umfassend das optische System nach einem der vorhergehenden Ansprüche, eine Halteanordnung (20), die dazu konfiguriert ist, die Lichtleiterkonfiguration (12) derart am Kopf des Benutzers zu halten, dass eine der Hauptflächen dem Auge zugewandt ist und eine horizontale Achse der Lichtleiterkonfiguration parallel zu einer Linie zwischen den Pupillen des Benutzers ist, und einen Bildprojektor (14), der optisch mit der Lichtleiterkonfiguration (12) gekoppelt ist, um ein kollimiertes Bild einzuführen, das sich in einer ersten Richtung innerhalb der Lichtleiterkonfiguration durch innere Reflexion ausbreitet, wobei die Lichtleiterkonfiguration (12) einen zweiten Satz von zueinander parallelen ebenen teilweise reflektierenden Flächen (19) einschließt, die angeordnet sind, um Licht fortschreitend auszukoppeln, und wobei eine Erstreckungsrichtung des zweiten Satzes schräg zu der horizontalen Achse ist.

8. Kopfmontierte Anzeige nach Anspruch 7, wobei der erste Satz von teilweise reflektierenden Flächen (17) derart angewinkelt ist, dass die zweite Richtung im Wesentlichen senkrecht zu der Erstreckungsrichtung des zweiten Satzes von teilweise reflektierenden Flächen (19) ist.

## Revendications

1. Système optique pour diriger de la lumière d'image depuis un projecteur (14) vers une boîte de mouvement de l'œil (26) pour une visualisation par un œil d'un utilisateur, le système optique comprenant :
- une configuration de guide de lumière (12) présentant une paire de surfaces principales externes mutuellement parallèles pour permettre la propagation de la lumière d'image par réflexion interne au niveau desdites surfaces principales ; et
- un agencement de couplage d'entrée (15) configuré pour coupler la lumière d'image provenant du projecteur (14) dans ladite configuration de guide de lumière (12) de manière à se propager selon une première direction dans le plan à l'intérieur de ladite configuration de guide de lumière par réflexion interne au niveau desdites surfaces principales externes,
ladite configuration de guide de lumière (12) comprenant :
- un premier composant de guide de lumière (16) formé à partir d'une séquence de plaques transparentes liées ensemble séquentiellement au niveau d'un jeu d'interfaces planes mutuellement parallèles (17), chaque interface étant pourvue d'un revêtement partiellement réfléchissant, lesdites interfaces étant orientées de manière à dévier progressivement la lumière d'image se propageant à l'intérieur de ladite configuration de guide de lumière selon la première direction dans le plan de manière à se propager selon une deuxième direction dans le plan à l'intérieur de ladite configuration de guide de lumière par réflexion interne au niveau desdites surfaces principales externes ;
- un deuxième composant de guide de lumière (18) présentant une configuration de découplage pour découpler progressivement la lumière d'image se propageant selon la deuxième direction dans le plan vers l'œil de l'utilisateur ;
**caractérisé en ce que** :
- ledit premier composant de guide de lumière (16) occupe une sous-région non rectangulaire d'une aire de ladite configuration de guide de lumière de telle sorte que lesdites interfaces définissent des facettes partielles ; et **en ce que**
- ladite configuration de guide de lumière (12) comprend en outre un composant de guide de lumière clair interposé entre ledit premier composant de guide de lumière (16) et ledit deuxième composant de guide de lumière (18), ledit composant de guide de lumière clair étant un bloc complémentaire de verre ordinaire à indice adapté,
- dans lequel ledit premier composant de guide de lumière (16), ledit deuxième composant de guide de lumière (18) et ledit composant de guide de lumière clair sont combinés en ladite configuration de guide de lumière (12) sous la forme d'un guide de lumière plan continu délimité par ladite paire de surfaces principales mutuellement parallèles de sorte que la lumière d'image se propageant depuis le couplage d'entrée selon la première direction dans le plan soit progressivement redirigée par les revêtements partiellement réfléchissants desdites interfaces (17) de manière à se propager selon la deuxième direction vers le deuxième composant de guide de lumière (18), au moins une partie de la lumière d'image redirigée traversant ledit composant de guide de lumière clair,
- et dans lequel une limite dudit premier composant de guide de lumière (16) comprend un premier bord rectiligne et une limite dudit deuxième composant de guide de lumière (18) comprend un deuxième bord rectiligne, ledit composant de guide de lumière clair étant délimité au moins en partie par un troisième bord rectiligne qui est lié optiquement audit premier bord rectiligne et un quatrième bord rectiligne qui est lié optiquement audit deuxième bord rectiligne, lesdits troisième et quatrième bords rectilignes présentant un angle aigu entre eux.

2. Système optique selon la revendication 1, dans lequel la limite dudit premier composant de guide de lumière (16) est non rectangulaire.

3. Système optique selon l'une quelconque des revendications précédentes, dans lequel la limite dudit premier composant de guide de lumière (16) comprend en outre un cinquième bord rectiligne colinéaire audit quatrième bord rectiligne, ledit cinquième bord rectiligne étant lié optiquement audit deuxième bord rectiligne.

4. Système optique selon l'une quelconque des revendications précédentes, dans lequel ladite configuration de découplage est mise en œuvre sous la forme d'un deuxième jeu d'interfaces planes mutuellement parallèles à l'intérieur dudit deuxième composant de guide de lumière (18), chaque interface dudit deuxième jeu d'interfaces étant pourvue d'un revêtement partiellement réfléchissant (19), ledit deuxième jeu d'interfaces étant orienté obliquement par rapport auxdites surfaces principales de manière à découpler progressivement la lumière d'image se propageant à l'intérieur de ladite configuration de guide de lumière selon la deuxième direction dans le plan vers l'œil de l'utilisateur.

5. Système optique selon la revendication 4, dans lequel des lignes d'intersection de plans contenant ledit deuxième jeu d'interfaces avec lesdites surfaces principales s'étendent parallèlement audit deuxième bord rectiligne.

6. Système optique selon la revendication 4, dans lequel des lignes d'intersection de plans contenant ledit deuxième jeu d'interfaces avec lesdites surfaces principales sont inclinées par rapport audit deuxième bord rectiligne.

7. Affichage monté sur la tête comprenant le système optique selon l'une quelconque des revendications précédentes, un agencement de support (20) configuré pour supporter la configuration de guide de lumière (12) sur la tête de l'utilisateur avec l'une des surfaces principales faisant face à l'œil et avec un axe horizontal de la configuration de guide de lumière parallèle à une ligne entre les pupilles de l'utilisateur, et un projecteur d'image (14) couplé optiquement à ladite configuration de guide de lumière (12) de manière à introduire une image collimatée destinée à se propager selon une première direction à l'intérieur de la configuration de guide de lumière par réflexion interne, dans lequel la configuration de guide de lumière (12) comprend un deuxième jeu de surfaces planes mutuellement parallèles, partiellement réfléchissantes (19) déployées pour découpler progressivement de la lumière, et dans lequel une direction d'allongement dudit deuxième jeu est oblique par rapport audit axe horizontal.

8. Affichage monté sur la tête selon la revendication 7, dans lequel ledit premier jeu de surfaces partiellement réfléchissantes (17) est disposé selon un angle de sorte que ladite deuxième direction soit sensiblement perpendiculaire à ladite direction d'allongement dudit deuxième jeu de surfaces partiellement réfléchissantes (19).
